# EUROPÄISCHE PATENTANMELDUNG

(11) **EP 4 166 362 A1**
(43) Veröffentlichungstag der Anmeldung: **19.04.2023**
(21) Anmeldenummer: 22195009.0
(22) Anmeldetag: 12.09.2022
(51) Int. Cl.: B60K 1/00, B60K 11/06, B60K 11/08

(54) **BODENBEARBEITUNGSMASCHINE**

(30) Priorität: 12.10.2021 DE 102021126363
(71) Anmelder: Hamm AG, 95643 Tirschenreuth (DE)
(72) Erfinder: Dagner, Josef, Altenstadt (DE); Klein, Thomas, Mitterteich (DE); Braunschläger, Stefan, Bärnau (DE); Pieske, Ronny, Zwönitz (DE); Golbs, Markus, Adorf Vogtland (DE)
(74) Vertreter: Ruttensperger Lachnit Trossin Gomoll

(57) **Zusammenfassung**

Eine Bodenbearbeitungsmaschine, insbesondere Bodenverdichter, umfasst einen Maschinenrahmen sowie eine an dem Maschinenrahmen getragene oder/und diesen wenigstens teilweise bereitstellende, einen Aggregataufnahmeraum (24) umgrenzende Umkleidung (26, 28), wobei die Umkleidung (26, 28) einen Kühllufteintrittsbereich (30) und einen Kühlluftaustrittsbereich (32) für den Aggregataufnahmeraum (24) durchströmende Kühlluft aufweist, wobei in dem Aggregataufnahmeraum (24) eine Mehrzahl von von den Aggregataufnahmeraum (24) vom Kühllufteintrittsbereich (30) zum Kühlluftaustrittsbereich (32) durchströmende Kühlluft umströmbaren Aggregaten angeordnet ist, wobei wenigstens zwei der in dem Aggregataufnahmeraum (24) angeordneten Aggregate zueinander unterschiedliche maximal zulässige Betriebstemperaturen aufweisen und wenigstens ein Aggregat mit höherer maximal zulässiger Betriebstemperatur in einer Kühlluftströmungsrichtung vom Kühllufteintrittsbereich (30) zum Kühlluftaustrittsbereich (32) stromaufwärts bezüglich wenigstens eines Aggregats mit niedrigerer maximal zulässiger Betriebstemperatur angeordnet ist.

## Beschreibung

Die vorliegende Erfindung betrifft eine Bodenbearbeitungsmaschine, die beispielsweise als Bodenverdichter ausgebildet sein kann, um einen Untergrund, wie zum Beispiel Asphaltmaterial, Geröll oder Erdreich, zu verdichten. Derartige Bodenbearbeitungsmaschinen können beispielsweise auch als Radlader, Bagger Fräsmaschinen oder landwirtschaftliche Maschinen ausgebildet sein.

Mit dem Übergang zu elektromotorisch angetriebenen Bodenbearbeitungsmaschinen besteht zunehmend die Anforderung, in derartige Bodenbearbeitungsmaschinen Aggregate, insbesondere elektrische bzw. elektronische Aggregate, zu integrieren, welche im Vergleich zu herkömmlicherweise in derartigen Bodenbearbeitungsmaschinen angeordneten mechanisch arbeitenden oder betriebenen Aggregaten eine vergleichsweise hohe Temperaturempfindlichkeit aufweisen.

Es ist die Aufgabe der vorliegenden Erfindung, eine Bodenbearbeitungsmaschine, wie zum Beispiel einen Bodenverdichter, vorzusehen, bei welcher auch für temperaturempfindliche Aggregate im Betrieb eine ausreichende Wärmeabfuhr gewährleistet ist.

Erfindungsgemäß wird diese Aufgabe gelöst durch eine Bodenbearbeitungsmaschine, insbesondere Bodenverdichter, umfassend einen Maschinenrahmen sowie eine an dem Maschinenrahmen getragene oder/und diesen wenigstens teilweise bereitstellende, einen Aggregataufnahmeraum umgrenzende Umkleidung, wobei die Umkleidung einen Kühllufteintrittsbereich und einen Kühlluftaustrittsbereich für den Aggregataufnahmeraum durchströmende Kühlluft aufweist, wobei in dem Aggregataufnahmeraum eine Mehrzahl von von den Aggregataufnahmeraum vom Kühllufteintrittsbereich zum Kühlluftaustrittsbereich durchströmende Kühlluft umströmbaren Aggregaten angeordnet ist, wobei wenigstens zwei der in dem Aggregataufnahmeraum angeordneten Aggregate zueinander unterschiedliche maximal zulässige Betriebstemperaturen aufweisen und wenigstens ein Aggregat mit höherer maximal zulässiger Betriebstemperatur in einer Kühlluftströmungsrichtung vom Kühllufteintrittsbereich zum Kühlluftaustrittsbereich stromaufwärts bezüglich wenigstens eines Aggregats mit niedrigerer maximal zulässiger Betriebstemperatur angeordnet ist.

Durch die systematische Anordnung von zu kühlenden Aggregaten im Aggregataufnahmeraum derart, dass zunächst eines oder mehrere Aggregate mit höherer Temperaturempfindlichkeit, also niedrigerer maximal zulässiger Betriebstemperatur, umströmt und somit gekühlt wird bzw. werden, bevor ein oder mehrere Aggregate mit niedrigerer Temperaturempfindlichkeit und somit höherer maximal zulässiger Betriebstemperatur von der Kühlluft umströmt wird bzw. werden, ist gewährleistet, dass die Kühlluft dort, wo sie beim Durchströmen des Aggregatsaufnahmeraums die niedrigste Temperatur hat, zunächst temperaturempfindlichere Aggregate kühlt, bevor sie auch weniger temperaturempfindliche Aggregate umströmt und somit Wärme von diesen aufnimmt. Zwar wird die Kühlluft beim Umströmen von temperaturempfindlicheren Aggregaten, also Aggregaten mit niedrigerer maximal zulässiger Betriebstemperatur, erwärmt, doch weist die danach weniger temperaturempfindliche Aggregate, also Aggregate mit höherer maximal zulässiger Betriebstemperatur, umströmende Luft immer noch eine ausreichend niedrige Temperatur auf, um diese weniger temperaturempfindlichen Aggregate auf einer unter deren maximal zulässiger Betriebstemperatur liegenden Temperatur zu halten.

Beispielsweise können in dem Aggregataufnahmeraum angeordnete Aggregate mit höherer maximal zulässiger Betriebstemperatur umfassen:
- wenigstens ein als Elektromotor ausgebildetes Antriebsaggregat,
   oder/und
- wenigstens einen Hydraulikfluidkühler,
   oder/und
- wenigstens ein hydraulisches Arbeitsaggregat, vorzugsweise Hydraulikpumpe oder/und Hydraulikventil oder/und Hydraulikmotor,
   oder/und
- wenigstens ein Kühlluftgebläse.

In dem Aggregataufnahmeraum angeordnete Aggregate mit niedrigerer maximal zulässiger Betriebstemperatur können umfassen:
- wenigstens eine Quelle elektrischer Energie,
   oder/und
- wenigstens einen Leistungselektronik-Systembereich.

Aus der vorangehenden Auflistung ist zu erkennen, dass die Aggregate mit niedrigerer maximal zulässiger Betriebstemperatur im allgemeinen Aggregate sind, welche erforderlich sind, um ein elektrisches Antriebsaggregat einer Bodenbearbeitungsmaschine betreiben zu können. Dies sind im Allgemeinen elektrische bzw. elektronische Komponenten, welche dazu vorgesehen bzw. erforderlich sind, um ein elektrisches Antriebsaggregat in geeigneter Weise mit einer Betriebsspannung zu versorgen. Die Aggregate mit höherer maximal zulässiger Betriebstemperatur sind neben einem bzw. mehreren derartigen elektrischen Antriebsaggregaten im Allgemeinen mechanisch arbeitende Komponenten, welche beispielsweise dazu vorgesehen sind, die von einem elektrischen Antriebsaggregat bereitgestellte Antriebsenergie zu den zu betreibenden Systembereichen zu leiten.

Die wenigstens eine Quelle elektrischer Energie kann beispielsweise eine Batterie oder/und eine Brennstoffzelle umfassen.

Der wenigstens eine Leistungselektronik-Systembereich kann beispielsweise wenigstens einen Wechselrichter oder/und wenigstens einen DC/DC-Wandler umfassen.

Bei einer erfindungsgemäß aufgebauten Bodenbearbeitungsmaschine können wenigstens ein Fahr-Elektromotor als Antriebsaggregat für eine Fahr-Hydraulikpumpe und wenigstens ein Lenk-Elektromotor als Antriebsaggregat für eine Lenk-Hydraulikpumpe vorgesehen sein, und dem Fahr-Elektromotor kann wenigstens ein Fahr-Wechselrichter zum Bereitstellen einer Fahr-Betriebsspannung für den Fahr-Elektromotor zugeordnet sein, während dem Lenk-Elektromotor wenigstens ein Lenk-Wechselrichter zum Bereitstellen einer Lenk-Betriebsspannung zugeordnet sein kann. Da ein derartiger Fahr-Wechselrichter bzw. auch eine zum Bereitstellen der elektrischen Energie genutzte Batterie im Betrieb einer Bodenbearbeitungsmaschine im Allgemeinen stärker belastet ist bzw. sind, als ein Lenk-Wechselrichter bzw. ein DC/DC-Wandler und aus diesem Grunde auch mehr abzuführende Wärme generiert, wird vorgeschlagen, dass wenigstens ein, vorzugsweise jeder Fahr-Wechselrichter oder/und wenigstens eine, vorzugsweise jede Quelle elektrischer Energie in der Kühlluftströmungsrichtung stromaufwärts bezüglich des wenigstens einen, vorzugsweise jedes Lenk-Wechselrichters oder/und des wenigstens einen, vorzugsweise jedes DC/DC-Wandlers angeordnet ist.

Eine Einordnung von Aggregaten als Aggregate mit höherer maximal zulässiger Betriebstemperatur bzw. Aggregate mit niedrigerer maximal zulässiger Betriebstemperatur kann beispielsweise dadurch erfolgen, dass eine maximal zulässige Betriebstemperatur von Aggregaten mit höherer maximal zulässiger Betriebstemperatur über einer Temperaturschwelle liegt und eine maximal zulässige Betriebstemperatur von Aggregaten mit niedrigerer maximal zulässiger Betriebstemperatur unter der Temperaturschwelle liegt.

Beispielsweise kann die Temperaturschwelle im Bereich von 80°C bis 100°C liegen.

Um die Aggregate mit höherer maximal zulässiger Betriebstemperatur bzw. mit niedrigerer maximal zulässiger Betriebstemperatur baulich voneinander getrennt anordnen zu können, kann eine den Aggregataufnahmeraum in einen Kaltraumbereich und einen in der Kühlluftströmungsrichtung stromabwärts bezüglich des Kaltraumbereichs angeordneten Warmraumbereich unterteilende erste Trennwandung vorgesehen sein. In dem Kaltraumbereich kann wenigstens ein Aggregat mit niedrigerer maximal zulässiger Betriebstemperatur angeordnet sein, und in dem Warmraumbereich kann wenigstens ein Aggregat mit höherer maximal zulässiger Betriebstemperatur angeordnet sein.

Um über die erste Trennwandung effizient Wärme abführen zu können, wird vorgeschlagen, dass die erste Trennwandung mit Aluminium oder Aluminium enthaltendem Material aufgebaut ist. Somit kann die besonders gute thermische Leitfähigkeit von Aluminium genutzt werden.

Für eine effiziente Kühlung der Aggregate mit niedrigerer maximal zulässiger Betriebstemperatur kann in dem Kaltraumbereich eine den Kaltraumbereich in ein Kühlluft-Hauptströmungsvolumen und ein Kühlluft-Nebenströmungsvolumen unterteilende zweite Trennwandung vorgesehen sein. Zur Herstellung einer Strömungsverbindung kann in der ersten Trennwandung wenigstens eine eine Kühlluftströmungsverbindung zwischen dem Kühlluft-Hauptströmungsvolumen und dem Warmraumbereich bereitstellende Kühlluftdurchströmöffnung vorgesehen sein. Alternativ oder zusätzlich kann vorgesehen sein, dass mehr als 50% des Kühlluftstroms aus dem Kühlluft-Hauptströmungsvolumen in den Kaltraumbereich strömen.

Zur guten Abfuhr von Wärme aus dem Bereich der zweiten Trennwandung und daran möglicherweise vorgesehenen Wärme erzeugenden Aggregaten bzw. Systembereichen ist es vorteilhaft, wenn die zweite Trennwandung mit Aluminium oder Aluminium enthaltendem Material aufgebaut ist.

Bei derartiger Aufteilung des Kaltraumbereichs ist es besonders vorteilhaft, wenn wenigstens ein, vorzugsweise jeder Leistungselektronik-Systembereich, also beispielsweise wenigstens ein, vorzugsweise jeder Wechselrichter oder/und wenigstens ein, vorzugsweise jeder DC/DC-Wandler, an einer dem Kühlluft-Nebenströmungsvolumen zugewandten Seite der zweiten Trennwandung angeordnet ist oder/und wenigstens eine, vorzugsweise jede Quelle elektrischer Energie, also beispielsweise wenigstens eine, vorzugsweise jede Brennstoffzelle bzw. Batterie, im Kühlluft-Hauptströmungsvolumen angeordnet ist. Die vorteilhafterweise mit Metallmaterial, wie zum Beispiel Aluminiummaterial, aufgebaute zweite Trennwandung stellt eine große von Kühlluft umströmbare Oberfläche bereit, über welche von an der zweiten Trennwandung getragenen Aggregaten auf diese übertragene Wärme effizient abgeführt werden kann.

Zur Erzeugung eines Kühlluftstroms kann wenigstens ein Kühlluftgebläse zum Fördern von Kühlluft von dem Kühllufteintrittsbereich zum Kühlluftaustrittsbereich durch den Aggregataufnahmeraum hindurch vorgesehen sein.

Dabei kann für einen effizienten Förderbetriebs beispielsweise wenigstens ein Kühlluftgebläse an der ersten Trennwandung im Bereich einer Kühlluftdurchströmöffnung angeordnet sein.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: eine der Fig. 1 entsprechende Seitenansicht mit einer Darstellung von in einem Aggregataufnahmeraum angeordneten Aggregaten;
- Fig. 3: eine perspektivische Ansicht eines Teils eines Vorderwagens der Bodenbearbeitungsmaschine der Fig. 1 mit in dem Aggregataufnahmeraum angeordneten Aggregaten;
- Fig. 4: eine prinzipartige Seitenansicht der in dem Aggregataufnahmeraum angeordneten Aggregate.

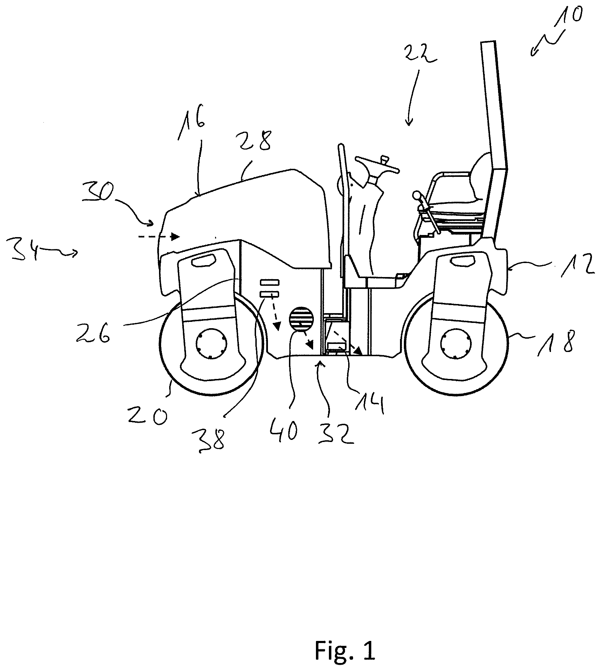

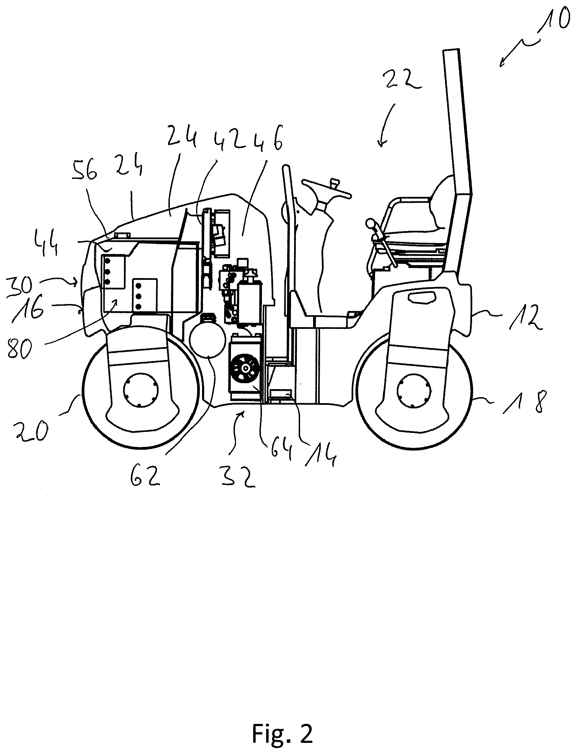

Die vorliegende Erfindung wird nachfolgend beispielhaft anhand einer als Bodenverdichter 10 ausgebildeten Bodenbearbeitungsmaschine erläutert. Der in den Fig. 1 und 2 in Seitenansicht dargestellte Bodenverdichter 10 umfasst einen Hinterwagen 12 und einen mit dem Hinterwagen 12 im Bereich einer Gelenkverbindung 14 um eine Lenkachse schwenkbar verbundenen Vorderwagen 16. Am Hinterwagen 12 und am Vorderwagen 16 ist jeweils eine Bodenbearbeitungswalze 18 bzw. 20 um eine zur Zeichenebene der Fig. 1 und 2 orthogonale Walzendrehachse drehbar getragen. Im dargestellten Ausgestaltungsbeispiel sind beide Bodenbearbeitungswalzen 18, 20 zur Drehung angetrieben, um den Bodenverdichter 10 über den zu verdichtenden Untergrund zu bewegen. Am Hinterwagen 12 ist ferner ein Bedienstand 22 angeordnet, in welchem eine Bedienperson Platz nehmen kann, um die dort angeordneten Betätigungsorgane zum Betreiben des Bodenverdichters 10 zu betätigen.

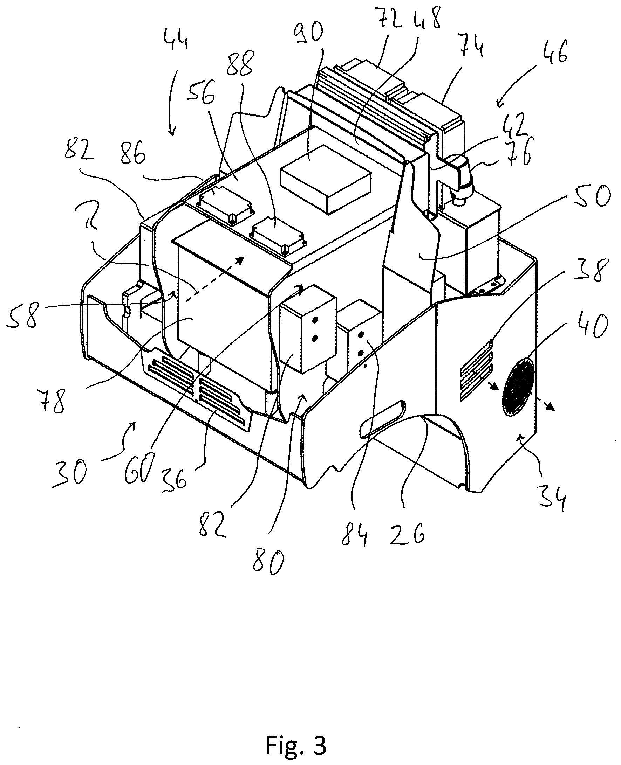

Bei dem in den Fig. 1 und 2 dargestellten Bodenverdichter 10 ist ein Großteil der zum Betreiben desselben vorgesehenen Aggregate in einem am Vorderwagen 16 gebildeten Aggregataufnahmeraum 24 angeordnet. Der Aggregataufnahmeraum 24 ist nach außen hin bereichsweise durch eine an einem Maschinenrahmen des Vorderwagens 16 vorgesehene oder/und diesen zumindest bereichsweise bereitstellende feststehende Umkleidung 26 und eine an der feststehenden Umkleidung 26 bzw. am Vorderwagen 16 beispielsweise schwenkbar angebrachte bewegbare Umkleidung 28 derart umgrenzt, dass der Aggregataufnahmeraum 24 im Wesentlichen nur im Bereich eines Kühllufteintrittsbereichs 30 für den Eintritt von Kühlluft offen ist und im Bereich eines Kühlluftaustrittsbereichs 32 für den Austritt von Kühlluft offen ist. Dabei kann der Kühllufteintrittsbereich 30 zu einer Frontseite 34 des Bodenverdichters 10 orientiert sein und kann eine Mehrzahl von beispielsweise in Fig. 3 an der feststehenden Umkleidung 26 erkennbaren Kühllufteintrittsöffnungen 36 und entsprechende Kühllufteintrittsöffnungen an der bewegbaren Umkleidung 28 umfassen. Der Kühlluftaustrittsbereich 32 kann an zu beiden Seiten des Bodenverdichters 10 orientierten Flächenbereichen der feststehenden Umkleidung 26 Austrittsöffnungen 38 bzw. auch Austrittsöffnungen 40 umfassen. Auch im Bereich der Gelenkverbindung 14 zwischen dem Hinterwagen 12 und dem Vorderwagen 14 kann die feststehende Umkleidung 26 offen sein, um, wie durch einen Strömungspfeil angedeutet, auch in diesem Bereich Kühlluft aus dem Aggregataufnahmeraum 24 ausleiten zu können. In den sonstigen Bereichen der feststehenden Umkleidung 26 bzw. der bewegbaren Umkleidung 28 kann der Aggregataufnahmeraum 24 nach außen hin im Wesentlichen abgeschlossen sein, wobei darauf hinzuweisen ist, dass es nicht zwingend erforderlich ist, hier einen vollkommen luftdichten Abschluss bereitzustellen. Von Bedeutung ist, dass die Kühlluft zum Bereitstellen einer durch die Strömungspfeile in den Fig. 1, 3 und 4 angedeuteten Kühlluftströmungsrichtung R durch den Aggregataufnahmeraum 24 hindurch zum größten Teil im Bereich des Kühllufteintrittsbereichs 30 in den Aggregataufnahmeraum 24 eintritt und zum größten Teil über den Kühlluftaustrittsbereich 32 aus dem Aggregataufnahmeraum 24 austritt.

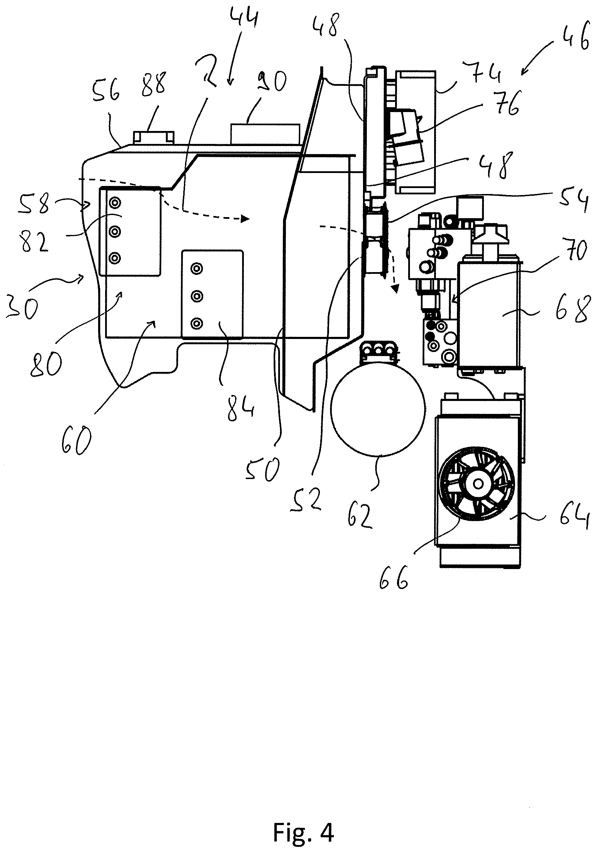

Der Aggregataufnahmeraum 24 ist durch eine erste Trennwandung 42 in einen in Fig. 4 links erkennbaren Kaltraumbereich 44 und einen in Fig. 4 rechts erkennbaren Warmraumbereich 46 unterteilt. Die Trennwandung 42 kann aus mehreren Wandungsteilen zusammengesetzt sein und beispielsweise in der Kühlluftströmungsrichtung R zueinander versetzt liegende Wandungsbereiche 48 bzw. 50 aufweisen. In Zusammenwirkung mit der bewegbaren Umkleidung 28 ist dafür gesorgt, dass über den Kühllufteintrittsbereich 30 in den Kaltraumbereich 44 eintretende Kühlluft im Wesentlichen nur im Bereich einer in dem Wandungsbereich 48 der ersten Trennwandung 42 gebildeten Kühlluftdurchströmöffnung 52 vom Kaltraumbereich 44 in den Warmraumbereich 46 gelangt. Um diese Strömung zu erzeugen, kann ein Kühlluftgebläse 54 vorgesehen sein, welches vorzugsweise im Bereich der Kühlluftdurchströmöffnung 52 in der ersten Trennwandung 42 an der dem Warmraumbereich 46 zugewandten Seite positioniert ist.

Der Kaltraumbereich 44 ist durch eine im Wesentlichen U-förmige zweite Trennwandung 56 in ein von der zweiten Trennwandung 56 und an der Unterseite von der feststehenden Umkleidung 26 umgrenztes Kühlluft-Hauptströmungsvolumen 58 und ein im Wesentlichen an der Außenseite der zweiten Trennwandung 56 gebildetes und nach außen hin von der feststehenden Umkleidung 26 sowie auch der bewegbaren Umkleidung 28 umgrenztes Kühlluft-Nebenströmungsvolumen 60 unterteilt. Das Kühlluft-Nebenströmungsvolumen 60 ist zum Warmraumbereich 46 hin im Wesentlichen durch den rahmenartigen Wandungsbereich 50 der ersten Trennwandung 42 abgeschlossen, so dass die in den Kaltraumbereich 44 eingeleitete Kühlluft im Wesentlichen vollständig durch das Kühlluft-Hauptströmungsvolumen 58 und durch die Kühlluftdurchströmöffnung 52 im Wandungsbereich 48 der ersten Trennwandung 42 hindurch in den Warmraumbereich 46 geleitet wird.

Die am Vorderwagen 16 des Bodenverdichters 10 angeordneten Aggregate weisen zueinander unterschiedliche maximal zulässige Betriebstemperaturen auf. Derartige maximal zulässige Betriebstemperaturen können beispielsweise vom Hersteller derartiger Aggregate bzw. auch vom Hersteller des Bodenverdichters 10 definiert bzw. vorgegeben werden, und zwar als derartige Temperaturen, welche gewährleisten, dass mit einer derartigen Temperatur ein jeweiliges Aggregat noch betrieben werden kann, ohne beschädigt zu werden. Eine derartige maximal zulässige Betriebstemperatur kann beispielsweise einen Temperaturabstand zu einer Temperatur aufweisen, von welcher bekannt ist, dass sie mit größter Wahrscheinlichkeit zu einer Schädigung oder einem Ausfall eines jeweiligen Aggregats führen wird.

Die nachfolgend beschriebene Systematik bei der Anordnung verschiedener Aggregate am Vorderwagen 16 zielt darauf ab, Aggregate, welche eine höhere Temperaturempfindlichkeit und daher eine niedrigere maximal zulässige Betriebstemperatur aufweisen, zuerst von der Kühlluft umströmen zu lassen, bevor auch Aggregate mit niedrigerer Temperaturempfindlichkeit und somit höherer maximal zulässiger Betriebstemperatur von der Kühlluft umströmt werden. Insbesondere kann dabei vorgesehen sein, dass eine im Bereich von 80°C bis 100°C liegende Temperaturschwelle eine Grenze zieht zwischen Aggregaten mit niedrigerer maximal zulässiger Temperaturempfindlichkeit und Aggregaten mit höherer maximal zulässiger Betriebstemperatur. Die Aggregate, welche als Aggregate mit niedrigerer maximal zulässiger Betriebstemperatur zu betrachten sind, werden weiter stromaufwärts, insbesondere also im Kaltraumbereich 44, angeordnet, während Aggregate, welche als Aggregate mit höherer maximal zulässiger Betriebstemperatur zu betrachten sind, weiter stromabwärts, insbesondere im Warmraumbereich 46, angeordnet sind. Wie nachfolgend erläutert, können im Kaltraumbereich 44 und auch im Warmraumbereich 46 die dort jeweils angeordneten Aggregate zueinander auch so positioniert werden, dass auch in diesen verschiedenen Raumbereichen zunächst diejenigen Aggregate umströmt werden, welche beispielsweise von den Aggregaten mit niedrigerer maximal zulässiger Betriebstemperatur die niedrigere maximal zulässige Betriebstemperatur aufweisen.

Im Warmraumbereich 46 sind bei dem elektromotorisch betriebenen Bodenverdichter 10 ein bzw. mehrere Elektromotoren 62 angeordnet. Die Elektromotoren 62 umfassen einen Fahr-Elektromotor, welcher über eine Fahr-Hydraulikpumpe in einem Fahr-Hydraulikkreislauf unter Druck stehendes Fluid, z. B. Hydrauliköl, generiert bzw. fördert, um die den beiden Bodenbearbeitungswalzen 18, 20 zugeordneten Fahr-Hydraulikmotoren zu speisen. Die Elektromotoren 62 können ferner einen Lenk-Elektromotor umfassen, welcher über eine Lenk-Hydraulikpumpe Druckfluid in einen Lenk-Hydraulikkreislauf einspeist, um zum Lenken des Bodenverdichters 10 vorgesehene Lenkorgane, wie z. B. Kolben/Zylinder-Einheiten, mit Druckfluid zu speisen. Das im Lenk-Hydraulikkreislauf strömende Druckfluid, also beispielsweise Hydrauliköl, kann auch genutzt werden, um in den Bodenbearbeitungswalzen 18, 20 vorgesehene Unwuchtanordnungen anzutreiben, um die Bodenbearbeitungswalzen 18, 20 in eine Vibrationsbewegung oder/und eine Oszillationsbewegung zu versetzen.

Ein weiteres im Warmraumbereich 46 angeordnetes Aggregat ist ein Kühler 64, welcher von dem Fluid des Fahr-Hydraulikkreislaufs oder/und des Lenk-Hydraulikkreislaufs durchströmbar ist, um dieses zu kühlen. Dem Kühler 64 kann ein Kühlergebläse 66 zugeordnet sein, welches Kühlluft aus dem Warmraumbereich 46 durch die an einer Seite der feststehenden Umkleidung 26 vorgesehenen Kühlluftaustrittsöffnungen 40 nach außen abgibt. Unabhängig vom Betrieb des Kühlluftgebläses 54 erzeugt auch das Kühlergebläse 66 einen Kühlluftstrom, welcher dafür sorgt, dass Kühlluft den Aggregataufnahmeraum 24 in der Kühlluftströmungsrichtung R durchströmt.

Weitere im Warmraumbereich 46 angeordnete Aggregate sind ein Fluidtank 68 sowie Hydraulikventile bzw. Hydraulikmotoren 70. Über diese wird Fluid entsprechend dem geforderten Betrieb in den verschiedenen Hyraulikkreisläufen so geleitet, dass es die mit Druckfluid zu versorgenden Systembereiche erreicht bzw. wieder in den Tank 68 zurück bzw. durch den Kühler 64 hindurch strömt.

Als weitere Aggregate sind im Warmraumbereich 46 im dargestellten Beispiel nebeneinander angeordnet an der ersten Trennwandung 42 getragene, fest verbaute und somit vom Bodenverdichter grundsätzlich nicht lösbare Ladegeräte 72, 74 vorgesehen. Die Ladegeräte 72, 74 können über einen Anschlussstecker 76 an eine externe Spannungsversorgung angeschlossen werden, um die für den Betrieb der Elektromotoren 62 erforderliche Energie einzuspeisen und in einer im Kaltraumbereich 44, insbesondere im stromaufwärtigen Endbereich des Kühlluft-Haupströmungsvolumens 58, positionierte Batterie 78 zu speichern. Eine derartige Batterie 78 bildet eine Quelle elektrische Energie, welche beispielsweise ergänzt oder ersetzt sein könnte durch eine Brennstoffzelle. Bei Verwendung ausschließlich eine Brennstoffzelle als Quelle elektrische Energie könnte auf das Vorsehen der Ladegeräte 72, 74 verzichtet werden

Den an der ersten Trennwandung 42 an deren dem Warmraumbereich 46 zugewandten Seite getragenen Ladegeräten 72, 74 können eigenständig betreibbare Lüfte zugeordnet sein, um dafür zu sorgen, dass im Ladebetrieb, welcher beispielsweise bei deaktiviertem Bodenverdichter 10 erfolgt, ein die Ladegeräte 72, 74 umströmender Kühlluftstrom generiert wird. Grundsätzlich können die Ladegeräte 72 jedoch auch im Betrieb des Bodenverdichters 10 zum Laden der Batterie 78 genutzt werden, wenn der Bodenverdichter 10 beispielsweise über den Anschlussstecker 76 auch kabelbetrieben arbeiten kann. In diesem Zustand werden also gleichzeitig die verschiedenen elektrisch zu betreibenden Systembereiche, insbesondere die Elektromotoren 62, über ein derartiges Verbindungskabel und den Anschlussstecker 76 mit elektrischer Energie gespeist und die Batterie 78 vermittels der Ladegeräte 72, 74 geladen. In einem derartigen Zustand kann der Kühlluftstrom durch das Kühlluftgebläse 54 bzw. auch den Kühlerlüfter 66 generiert werden. Gleichzeitig können auch die den Ladegeräten 72, 74 zugeordneten Lüfter betrieben werden, um ausreichend Wärme von diesen abzuführen.

Im Kaltraumbereich 44 sind neben der Batterie 78, welche im Wesentlichen in dem von der zweiten Trennwandung 56 umschlossenen Kühlluft-Hauptströmungsvolumen 58 angeordnet ist, an der dem Kühlluft-Nebenströmungsvolumen 60 zugwandten Seite der zweiten Trennwandung 56 beispielsweise an den beiden seitlich orientierten Bereichen derselben Leistungselektronik-Systembereiche bereitstellende Wechselrichter 80 getragen, welche aus der durch die Batterie zu bereitgestellten Gleichspannung die für den Betrieb insbesondere der Elektromotoren 62 erforderliche Drei-Phasen-Spannung generieren. Die Wechselrichter 80 umfassen Fahr-Wechselrichter 82, welche die für den Fahr-Elektromotor erforderliche Spannung generieren, und Lenk-Wechselrichter 84, welche die für den Lenk-Elektromotor erforderliche Spannung generieren. Man erkennt in Fig. 4, dass die Fahr-Wechselrichter 82, welche im Betrieb stärker belastet sind, als die Lenk-Wechselrichter 84, zunächst von der über dem Kühllufteintrittsbereich 30 eingeleiteten und somit noch kälteren Kühlluft umströmt werden, bevor diese auch die Lenk-Wechselrichter 84 umströmt. Dabei erfolgt die Kühlwechselwirkung zwischen der Kühlluft und den verschiedenen Wechselrichtern 80 primär dadurch, dass die Wechselrichter 80 im Kühlluft-Nebenströmungsvolumen 60 angeordnet sind, in welchem nur ein vergleichsweise geringer Teil der den Aggregataufnahmeraum 24 durchströmenden Kühlluft strömt bzw. zirkuliert, und somit Wärme auf die eine vergleichsweise große von Kühlluft umströmbare Oberfläche bereitstellende zweite Trennwandung 56 übertragen. Diese ist aus einem Material mit guter Wärmeleitfähigkeit, beispielsweise Aluminiummaterial aufgebaut, so dass für einen effizienten Abtrag der im Bereich der Wechselrichter 80 generierten Wärme gesorgt ist.

An der dem Kühlluft-Nebenströmungsvolumen 60 zugewandten Seite der zweiten Trennwandung 56 sind beispielsweise an einem oberen Bereich derselben mehrere ebenfalls Leistungselektronik-Systembereiche bereitstellende DC/DC-Wandler (Gleichspannung/Gleichspannung-Wandler) 86, 88 vorgesehen, um in einem Bordspannungssystem die für den Betrieb verschiedener elektrisch zu betreibender Systembereiche, wie zum Beispiel der Beleuchtung, verschiedene Steuergeräte oder dergleichen, erforderlichen Spannungspegel bereitzustellen. Da auch die DC/DC-Wandler im Betrieb weniger stark belastet sind bzw. weniger thermisch empfindlich sind, als beispielsweise die vergleichsweise stark belasteten Fahr-Wechselrichter 82, können auch diese, ebenso wie die Lenk-Wechselrichter 84, in der Kühlluftströmungsrichtung R stromabwärts bezüglich der Fahr-Wechselrichter 82 bzw. auch stromabwärts bezüglich der thermisch sensiblen Batterie 78 bzw. dem stromaufwärtigen Endbereich derselben angeordnet sein.

An der Oberseite der zweiten Trennwandung 56 können beispielsweise in einem Gehäuse 90 untergebracht weitere elektrische Komponenten, wie z. B. Sicherungen, vorgesehen sein. Diese Komponenten sind grundsätzlich zwar weniger temperaturempfindlich, sind im dargestellten Beispiel jedoch aufgrund des Umstandes, dass in diesem Bereich der zweiten Trennwandung Raum zur Aufnahme dieser Komponenten vorhanden ist, dort positioniert. Grundsätzlich könnte beispielsweise auch vorgesehen sein, dass in diesem Bereich eines oder beide Ladegeräte 72, 74 positioniert ist bzw. sind. Insbesondere dann, wenn der Bodenverdichter 10 nicht kabelgebunden betrieben werden soll und somit die Ladegeräte 72, 74 im Allgemeinen dann in Betrieb sind, wenn die verbleibenden Systembereiche des Bodenverdichters 10 nicht aktiviert sind, besteht zwischen der thermischen Belastung der Ladegeräte 72, 74 einerseits und der thermischen Belastung der anderen im Aggregataufnahmeraum 24 angeordneten Aggregate andererseits keine Wechselwirkung, so dass die Ladegeräte 72, 74 je nachdem, wo ausreichend Bauraum zur Verfügung steht, im Warmraumbereich 46 oder im Kaltraumbereich 44 angeordnet werden können.

Mit der vorangehend erläuterten Aufteilung verschiedener Aggregate am Bodenverdichter 10 im Aggregataufnahmeraum 24 ist gewährleistet, dass diejenigen Aggregate, welche eine höhere Temperaturempfindlichkeit aufweisen und daher mit einer niedrigeren maximal zulässigen Betriebstemperatur zu betreiben sind, im Kaltraum 44 angeordnet sind und somit zunächst von der noch kühleren Kühlluft umströmt werden. Diejenigen Aggregate, welche weniger temperaturempfindlich sind und daher mit höherer maximal zulässiger Betriebstemperatur betrieben werden können, sind im Warmraumbereich 46 positioniert und werden von der Kühlluft umströmt, nachdem diese im Kaltraumbereich 44 Wärme aufgenommen hat und daher eine bereits angehobene Temperatur aufweist. Die Kühlluft ist beim Durchströmen des Warmraumbereichs 46 jedoch immer noch ausreichend kalt, um von den dort angeordneten Aggregaten mit höherer maximal zulässiger Betriebstemperatur Wärme abführen zu können und diese auf einem für deren Betrieb geeigneten Temperaturniveau zu halten.

Für eine effiziente Abfuhr von Wärme ist es weiter vorteilhaft, wenn die erste Trennwandung 42 oder/und die zweite Trennwandung 56 mit Aluminium oder Aluminium enthaltendem Material aufgebaut ist, beispielsweise aus Aluminiumblech gebogen ist. Aluminium hat im Vergleich zu Stahl eine deutlich höhere thermische Leitfähigkeit, so dass insbesondere aus Bereichen, in welche in diese Wandungen durch daran getragene, Wärme erzeugende Aggregate Wärme eingeleitet wird, diese Wärme schnell in andere zur Abgabe von Wärme an die Kühlluft bzw. Umgebungsluft frei liegende Bereiche dieser Wandungen geleitet werden kann. Um insbesondere auch im Angrenzungsbereich verschiedener Aggregate an diese Wandungen einen guten Wärmeübertragungskontakt zu gewährleisten, ist es vorteilhaft, wenn an diesen Aggregaten zur Anlage an der ersten Trennwandung 42 bzw. der zweiten Trennwandung 56 vorgesehene, mit Aluminium oder Aluminium enthaltendem Material aufgebaute Kühlelemente bzw. Wärmeübertragungselemente vorgesehen sind.

Wie bereits ausgeführt, kann die Zuordnung zum Kaltraumbereich 44 einerseits bzw. zum Warmraumbereich 46 andererseits dadurch erfolgen, dass die maximal zulässige Betriebstemperatur der im Kaltraumbereich 44 anzuordnenden Aggregate unter einer hierfür vorgesehenen Temperaturschwelle, beispielsweise im Bereich von 80°C bis 100°C, liegt, während die maximal zulässige Betriebstemperatur der im Warmraumbereich 46 aufzunehmenden Aggregate über dieser Temperaturschwelle liegen kann. Ist der Aggregataufnahmeraum beispielsweise nicht durch eine Trennwandung in voneinander getrennte Strömungsbereiche unterteilt, kann beispielsweise vorgesehen sein, dass in der Kühlluftströmungsrichtung aufeinander folgend Aggregate mit niedrigerer maximal zulässiger Betriebstemperatur stromaufwärts bezüglich Aggregaten mit höherer maximal zulässiger Betriebstemperatur angeordnet sind, beispielsweise derart, dass die maximal zulässige Betriebstemperatur von in der Kühlluftströmungsrichtung aufeinander folgenden Aggregaten zunimmt. Grundsätzlich kann, abhängig von den baulichen Gegebenheiten, die Systematik lokal durchbrochen sein, so dass beispielsweise, obgleich dies aus thermischen Gründen nicht erforderlich ist, ein Aggregat mit höherer maximal zulässiger Betriebstemperatur weiter stromaufwärts beispielsweise im Kaltraumbereich oder beispielsweise zwischen zwei Aggregaten mit niedrigerer, zueinander jedoch ansteigender maximal zulässiger Betriebstemperatur positioniert ist.

## Patentansprüche

1. Bodenbearbeitungsmaschine, insbesondere Bodenverdichter, umfassend einen Maschinenrahmen sowie eine an dem Maschinenrahmen getragene oder/und diesen wenigstens teilweise bereitstellende, einen Aggregataufnahmeraum (24) umgrenzende Umkleidung (26, 28), wobei die Umkleidung (26, 28) einen Kühllufteintrittsbereich (30) und einen Kühlluftaustrittsbereich (32) für den Aggregataufnahmeraum (24) durchströmende Kühlluft aufweist, wobei in dem Aggregataufnahmeraum (24) eine Mehrzahl von von den Aggregataufnahmeraum (24) vom Kühllufteintrittsbereich (30) zum Kühlluftaustrittsbereich (32) durchströmende Kühlluft umströmbaren Aggregaten angeordnet ist, wobei wenigstens zwei der in dem Aggregataufnahmeraum (24) angeordneten Aggregate zueinander unterschiedliche maximal zulässige Betriebstemperaturen aufweisen und wenigstens ein Aggregat mit höherer maximal zulässiger Betriebstemperatur in einer Kühlluftströmungsrichtung vom Kühllufteintrittsbereich (30) zum Kühlluftaustrittsbereich (32) stromaufwärts bezüglich wenigstens eines Aggregats mit niedrigerer maximal zulässiger Betriebstemperatur angeordnet ist.

2. Bodenbearbeitungsmaschine nach Anspruch 1,
**dadurch gekennzeichnet,**
**dass** in dem Aggregataufnahmeraum (24) angeordnete Aggregate mit höherer maximal zulässiger Betriebstemperatur umfassen:
- wenigstens ein als Elektromotor (62) ausgebildetes Antriebsaggregat, oder/und
- wenigstens einen Hydraulikfluidkühler (64),
oder/und
- wenigstens ein hydraulisches Arbeitsaggregat, vorzugsweise Hydraulikpumpe oder/und Hydraulikventil oder/und Hydraulikmotor (70), oder/und
- wenigstens ein Kühlluftgebläse (54),
und **dass** in dem Aggregataufnahmeraum (24) angeordnete Aggregate mit niedrigerer maximal zulässiger Betriebstemperatur umfassen:
- wenigstens eine Quelle elektrischer Energie,
oder/und
- wenigstens einen Leistungselektronik-Systembereich.

3. Bodenbearbeitungsmaschine nach Anspruch 2,
**dadurch gekennzeichnet, dass** die wenigstens eine Quelle elektrischer Energie eine Batterie (78) oder/und eine Brennstoffzelle umfasst.

4. Bodenbearbeitungsmaschine nach Anspruch 2 oder 3,
**dadurch gekennzeichnet, dass** der wenigstens eine Leistungselektronik-Systembereich wenigstens einen Wechselrichter (80) oder/und wenigstens einen DC/DC-Wandler (86, 88) umfasst.

5. Bodenbearbeitungsmaschine nach Anspruch 4,
**dadurch gekennzeichnet, dass** wenigstens ein Fahr-Elektromotor als Antriebsaggregat für eine Fahr-Hydraulikpumpe und wenigstens ein Lenk-Elektromotor als Antriebsaggregat für eine Lenk-Hydraulikpumpe vorgesehen ist, dass dem Fahr-Elektromotor wenigstens ein Fahr-Wechselrichter (82) zum Bereitstellen einer Fahr-Betriebsspannung für den Fahr-Elektromotor zugeordnet ist, dass dem Lenk-Elektromotor wenigstens ein Lenk-Wechselrichter (84) zum Bereitstellen einer Lenk-Betriebsspannung zugeordnet ist, und dass wenigstens ein, vorzugsweise jeder Fahr-Wechselrichter (82) oder/und wenigstens eine, vorzugsweise jede Quelle elektrischer Energie in der Kühlluftströmungsrichtung (R) stromaufwärts bezüglich des wenigstens einen, vorzugsweise jedes Lenk-Wechselrichters (84) oder/und des wenigstens einen, vorzugsweise jedes DC/DC-Wandlers (86, 88) angeordnet ist.

6. Bodenbearbeitungsmaschine nach einem der Ansprüche 1-5,
**dadurch gekennzeichnet, dass** eine maximal zulässige Betriebstemperatur von Aggregaten mit höherer maximal zulässiger Betriebstemperatur über einer Temperaturschwelle liegt und eine maximal zulässige Betriebstemperatur von Aggregaten mit niedrigerer maximal zulässiger Betriebstemperatur unter der Temperaturschwelle liegt.

7. Bodenbearbeitungsmaschine nach Anspruch 6,
**dadurch gekennzeichnet, dass** die Temperaturschwelle im Bereich von 80°C bis 100°C liegt.

8. Bodenbearbeitungsmaschine nach einem der Ansprüche 1-7,
**dadurch gekennzeichnet, dass** eine den Aggregataufnahmeraum (24) in einen Kaltraumbereich (44) und einen in der Kühlluftströmungsrichtung (R) stromabwärts bezüglich des Kaltraumbereichs (44) angeordneten Warmraumbereich (46) unterteilende erste Trennwandung (42) vorgesehen ist, und dass in dem Kaltraumbereich (44) wenigstens ein Aggregat mit niedrigerer maximal zulässiger Betriebstemperatur angeordnet ist und in dem Warmraumbereich wenigstens ein Aggregat mit höherer maximal zulässiger Betriebstemperatur angeordnet ist.

9. Bodenbearbeitungsmaschine nach Anspruch 8,
**dadurch gekennzeichnet, dass** die erste Trennwandung (42) mit Aluminium oder Aluminium enthaltendem Material aufgebaut ist.

10. Bodenbearbeitungsmaschine nach Anspruch 8 oder 9,
**dadurch gekennzeichnet, dass** in dem Kaltraumbereich (44) eine den Kaltraumbereich (44) in ein Kühlluft-Hauptströmungsvolumen (58) und ein Kühlluft-Nebenströmungsvolumen (60) unterteilende zweite Trennwandung (56) vorgesehen ist, wobei in der ersten Trennwandung (42) wenigstens eine eine Kühlluftströmungsverbindung zwischen dem Kühlluft-Hauptströmungsvolumen (58) und dem Warmraumbereich (46) bereitstellende Kühlluftdurchströmöffnung (52) vorgesehen ist oder/und mehr als 50% des Kühlluftstroms aus dem Kühlluft-Hauptströmungsvolumen (58) in den Warmraumbereich (46) strömt.

11. Bodenbearbeitungsmaschine nach Anspruch 10,
**dadurch gekennzeichnet, dass** die zweite Trennwandung (42) mit Aluminium oder Aluminium enthaltendem Material aufgebaut ist.

12. Bodenbearbeitungsmaschine nach Anspruch 2 und Anspruch 10 oder 11, **dadurch gekennzeichnet, dass** wenigstens ein, vorzugsweise jeder Leistungselektronik-Systembereich an einer dem Kühlluft-Nebenströmungsvolumen (60) zugewandten Seite der zweiten Trennwandung (56) angeordnet ist oder/und wenigstens eine, vorzugsweise jede Quelle elektrischer Energie im Kühlluft-Hauptströmungsvolumen (58) angeordnet ist.

13. Bodenbearbeitungsmaschine nach einem der vorangehenden Ansprüche, **dadurch gekennzeichnet, dass** wenigstens ein Kühlluftgebläse (54) zum Fördern von Kühlluft von dem Kühllufteintrittsbereich (30) zum Kühlluftaustrittsbereich (32) durch den Aggregataufnahmeraum (24) hindurch vorgesehen.

14. Bodenbearbeitungsmaschine nach Anspruch 13 und Anspruch 8, 9 oder 10, **dadurch gekennzeichnet, dass** wenigstens ein Kühlluftgebläse (54) an der ersten Trennwandung (42) im Bereich einer Kühlluftdurchströmöffnung (54) angeordnet ist.
